Europäisches Patentamt

**European Patent Office**

**Office européen des brevets**

(11) Publication number: **0 311 296**
**A1**

## (12) EUROPEAN PATENT APPLICATION

(21) Application number: **88309001.1**

(22) Date of filing: **29.09.88**

(51) Int. Cl.⁴: **F16L 47/06 , F16L 13/11**

(30) Priority: **06.10.87 GB 8723467**

(43) Date of publication of application:
**12.04.89 Bulletin 89/15**

(84) Designated Contracting States:
**AT BE CH DE ES FR GB GR IT LI LU NL SE**

(71) Applicant: **HEPWORTH PLASTICS LIMITED**
**Genefax House Tapton Park Road**
**Sheffield S10 3FJ(GB)**

(72) Inventor: **Gray, William George**
**5, Ashborne Drive Summerseat**
**Bury Lancs.(GB)**

(74) Representative: **Hulse, Thomas Arnold et al**
**Hulse & Co. Cavendish Buildings West**
**Street**
**Sheffield S1 1ZZ(GB)**

(54) **Pipe couplings.**

(57) A plastics coupling for use with plastics pipe comprises a socket (21) adapted to receive an end of a plastics pipe with a fit suitable for securing and sealing of the inserted pipe by solvent cement welding or adhesive or sealant, and an annular cap (23) having a skirt portion (24), snap-action means (25, 26) preventing accidental removal of the cap from the socket, a cuff portion (27) of the cap (23) projecting beyond the rim (28) of the socket (21) when the snap-action means (25, 26) has been engaged, and a sealing ring (29) sealingly secured within the cuff portion (27) such that when the snap-action means has been engaged the inner side (30) of the sealing ring will be in sealing engagement with the rim (28) of the socket and the inner periphery (31) of the sealing ring can seal round an inserted pipe as an alternative to solvent cement welding (or the like) in the cap-less socket.

Fig. 1

## PIPE COUPLINGS

This invention relates to pipe couplings, more particularly for plastics pipes, and has for its object the provision of a plastics coupling capable of being secured and sealed to a plastics pipe by means of solvent cement welding (or adhesive or sealant) or by means of a sealing ring between the coupling and the pipe.

According to the present invention a plastics coupling for use with plastics pipe comprises a socket having an internal diameter adapted to receive an end of a plastics pipe with an easy fit suitable for securing and sealing of the inserted pipe by solvent cement welding (or adhesive or sealant), and an annular cap having a skirt portion slidable over the outside of the socket, snap-action means between the skirt portion and the socket which when engaged prevents accidental removal of the cap from the socket, a cuff portion of the cap projecting beyond the rim of the socket when the snap-action means has been engaged, and a sealing ring sealingly secured within the cuff portion such that when the snap-action means has been engaged the inner side of the sealing ring will be in sealing engagement with the rim of the socket and the inner periphery of the sealing ring can seal round an inserted pipe.

Thus the coupling socket may be used, without the cap and sealing ring, to receive a pipe end which is secured and sealed by solvent cement welding (or adhesive or sealant), or the cap and sealing ring may be applied to the socket for the coupling to receive a pipe end as a push-fit.

Preferably, the socket has an internal enlargement adjoining the rim, and the sealing ring has a sealing lip (or head) adapted to be accommodated in the enlargement, at least when the sealing lip is deflected and distended by an inserted pipe end, but the sealing lip may extend into the socket enlargement upon snapping of the cap on the socket, and the sealing lip may make contact with the cylindrical surface of the socket enlargement either before or as a result of insertion of a pipe. When an inserted pipe is to be secured in the capless socket by solvent cement welding (or adhesive or sealant), the socket enlargement can accommodate surplus cement (or adhesive or sealant) pushed back along the pipe as it is inserted in the socket, and a continuous bead of cement (or adhesive or sealant) visible round the pipe in the socket enlargement is an indication that an adequate amount has been used.

The cap may be a simple sleeve with the sealing ring co-moulded in the cuff portion; but the cuff portion preferably has an inwardly-projecting annular flange with an internal diameter not less than the internal diameter of the socket, the flange (at the mouth of the cap) affording pre-location of the sealing ring during co-moulding with the cap or when securing the sealing ring in the cap by adhesive or other bonding. The flange in the cap may also co-operate with the rim of the socket to grip an annular body portion of the sealing ring - even though the latter is secured in the cap to guard against loss before any fitting of the cap on the socket - and the flange and or the rim may be inclined to the axis of the coupling so as to form with the inside of the cuff portion a dovetail or half-dovetail affording additional security to the body portion of the sealing ring, which may have one or more lips for sealing engagement with an inserted pipe, and the sealing ring may have an annular recess or recesses to accommodate displaced lip material.

The snap-action means may be an annular inwardly-projecting flange on the skirt portion on the cap engaging behind an annular shoulder on the outside of the socket, or it may be an annular rib on the outside of the socket engaging in a corresponding groove inside the skirt portion of the cap, or vice versa.

The rim of the socket may be externally bevelled (or rounded) and/or the end of the skirt portion of the cap remote from the sealing ring may be internally bevelled (or rounded), to facilitate fitting of the cap on to the socket.

A number of embodiments of the invention will now be described, by way of example only, with reference to the accompanying drawings, in which:-

Figure 1 is a half-sectional elevation of the two parts of a basic form of pipe coupling in accordance with the invention;

Figure 2 corresponds to Figure 1 but shows the two parts fitted together;

Figure 3 corresponds to Figure 2 but shows a pipe inserted into the coupling;

Figure 4 corresponds to the right hand part of Figure 1 only, with a pipe inserted and sealed in the socket;

Figures 5 and 6 correspond to Figures 1 and 2 but show a first preferred embodiment of the invention;

Figures 7 and 8, 9 and 10, 11 and 12, 13 and 14, and 15 and 16 also correspond respectively to Figures 1 and 2 but show further preferred alternative embodiments; and

Figure 17 corresponds to Figure 16 but shows a pipe inserted into the coupling.

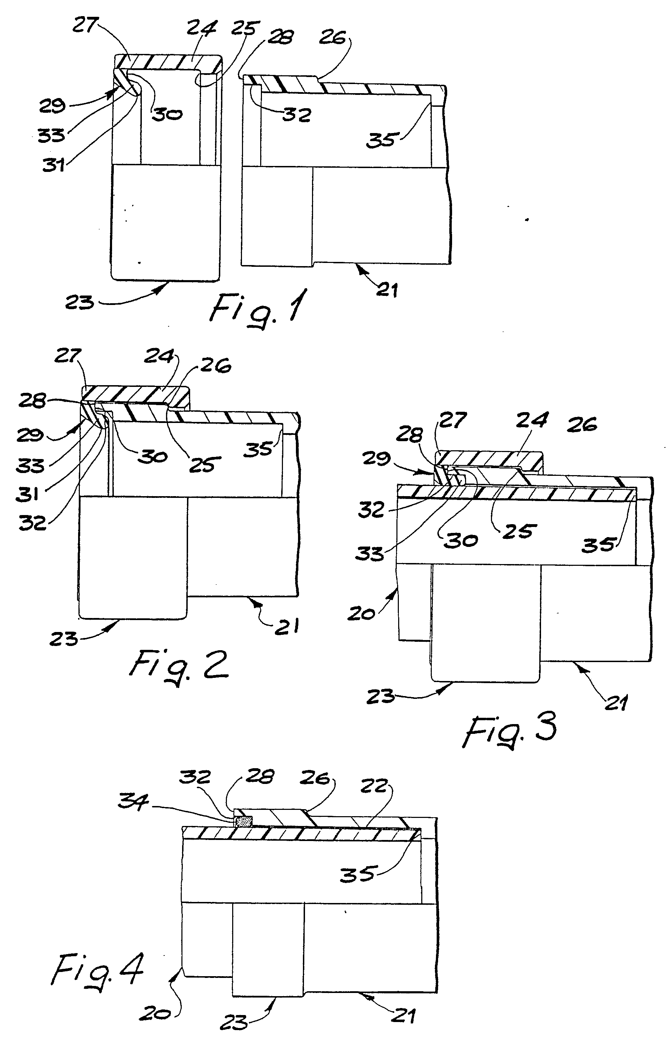

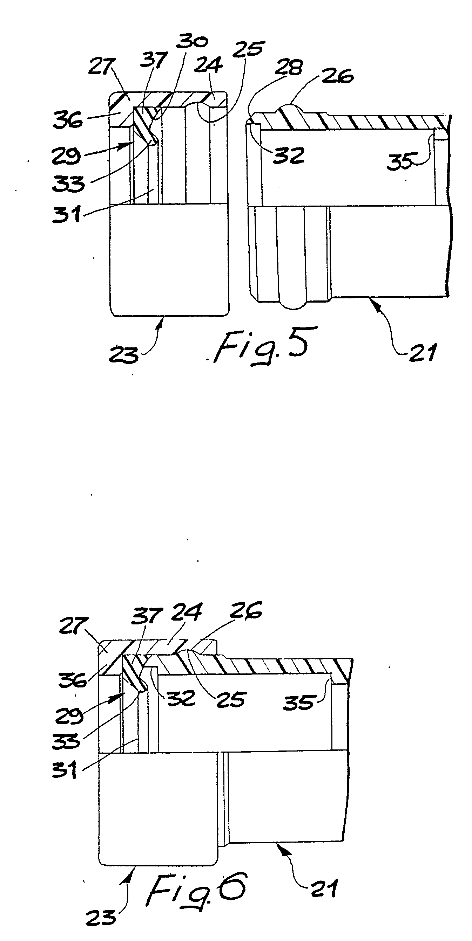

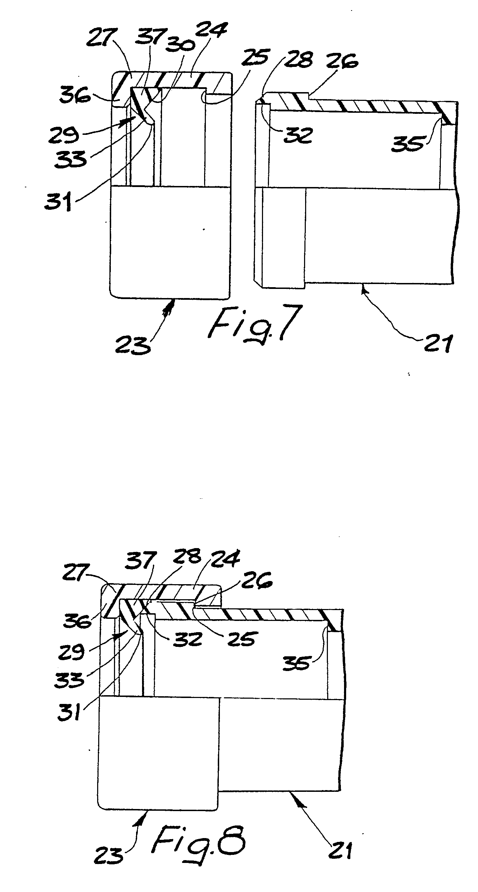

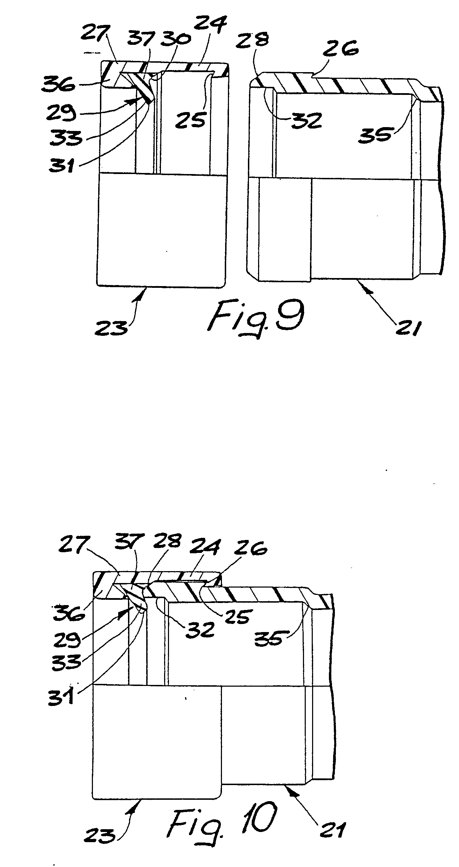

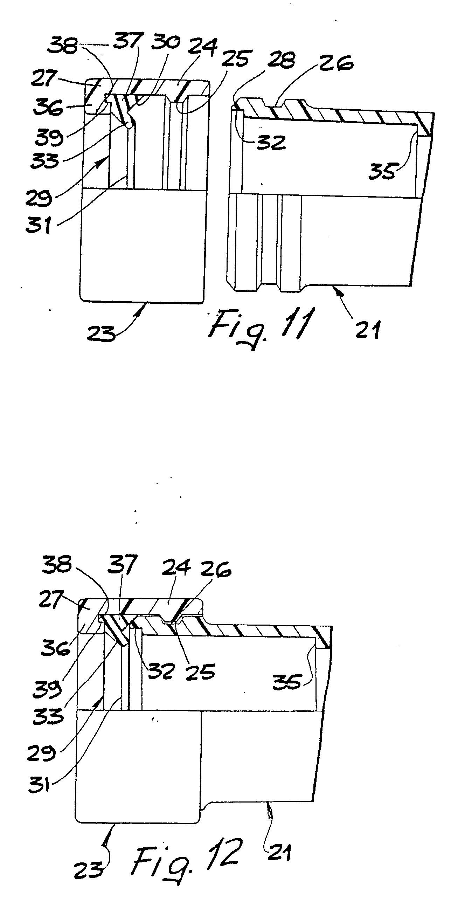

In Figures 1 and 2 a plastics coupling for use with a plastics pipe 20 (Figures 3 and 4) comprises a socket 21 having an internal diameter adapted to receive an end of a plastics pipe with a fit suitable for securing and sealing of the inserted pipe by solvent cement welding (or adhesive or sealant) 22, as shown in Figure 4, and an annular cap 23 having a skirt portion 24 slidable over the outside of the socket 21, snap-action means 25, 26 between the skirt portion and the socket which when engaged prevents accidental removal of the cap from the socket, a cuff portion 27 of the cap 23 projecting beyond the rim 28 of the socket 21 when the snap-action means has been engaged, and a sealing ring 29 sealingly secured within the cuff portion 27 such that when the snap-action means 25, 26 has been engaged (see Figure 2) the inner side 30 of the sealing ring will be in sealing engagement with the rim 28 of the socket and the inner periphery 31 of the sealing ring 29 can seal round an inserted pipe, as shown in Figure 3.

Thus the coupling socket 21 may be used, without the cap 23 and sealing ring 29, to receive a pipe end which is secured and sealed by solvent cement welding (or adhesive or sealant) 22, as shown in Figure 4, or the cap 23 and sealing ring 29 may be applied, as shown in Figure 2, to the socket 21 for the coupling to receive a pipe end as a push-fit, as shown in Figure 3.

Preferably, as shown in Figures 1 to 4, the socket 21 has an internal enlargement 32 adjoining the rim 28, and the sealing ring has a sealing lip (or head) 33 adapted to be accommodated in the enlargement 32 when the sealing lip is deflected and distended, as shown in Figure 3, by an inserted pipe. When an inserted pipe is to be secured in the cap-less socket 21 by solvent cement welding (or adhesive or sealant) 22, as shown in Figure 4, the socket enlargement 32 can accommodate surplus cement (or adhesive or sealant) pushed back along the pipe as it is inserted in the socket, and a continuous bead 34 of cement (or adhesive or sealant) visible round the pipe in the socket enlargement 32 is an indication that an adequate amount has been used.

The snap-action means 25, 26 consists of an inwardly-projecting flange 25 on the skirt portion 24 of the cap 23 engaging behind an annular shoulder 26 on the outside of the socket 21. The inner end of the socket 21 is provided with an annular shoulder (or flange) 35, or a number of inward projections (not shown) may be provided to constitute a stop for the end proper of an inserted pipe.

The socket 21 may be formed on one end of a plastics pipe, or on an inlet or outlet or branch of a pipe fitting, or on one end of a coupling sleeve the other end of which is provided with a similar coupling.

It is also preferred, as shown in all of Figures 5 to 17, for the cuff portion 27 of the cap 23 to have an inwardly-projecting annular flange 36 with an internal diameter not less than the internal diameter of the socket 21, the flange 36, being at the mouth of the cap, affording pre-location of the sealing ring 29 during co-moulding with the cap 23 or when securing the sealing ring in the cap by adhesive or other bonding.

The flange 36 in the cap also co-operates with the rim 28 of the socket 21 to grip an annular body portion 37 of the sealing ring 29 - even though the latter is secured in the cap to guard against loss before any fitting of the cap on the socket - and in Figures 5 to 8 the rim 28 of the socket 21 is inclined to the axis of the coupling so as to form with the inside of the cuff portion 27 a half-dovetail affording additional security to the body portion 37 of the sealing ring. Even greater security of the body portion 37 is afforded in Figures 9 and 10 by also inclining the inside of the flange 36 to form with the inclined rim 28 of the socket 21 a full dovetail, while in Figures 11 and 12 the inside of the flange 36 has a square undercut 38 to match a square flange 39 on the body portion of the sealing ring.

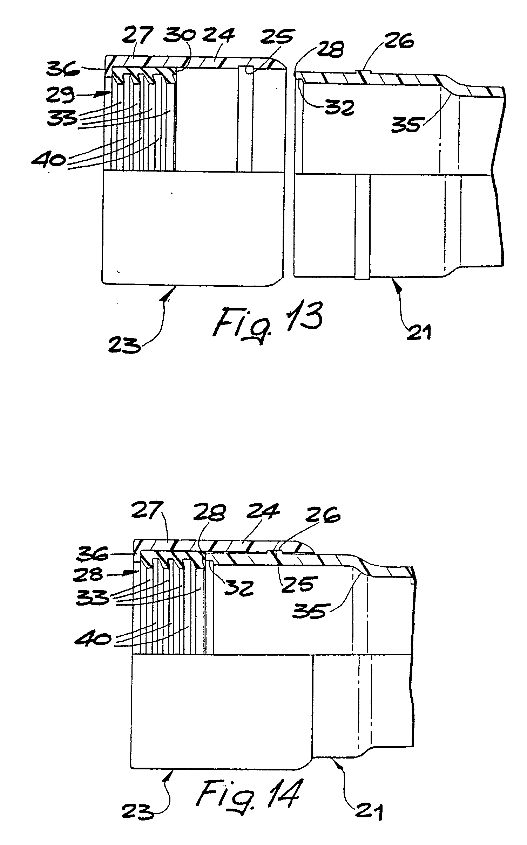

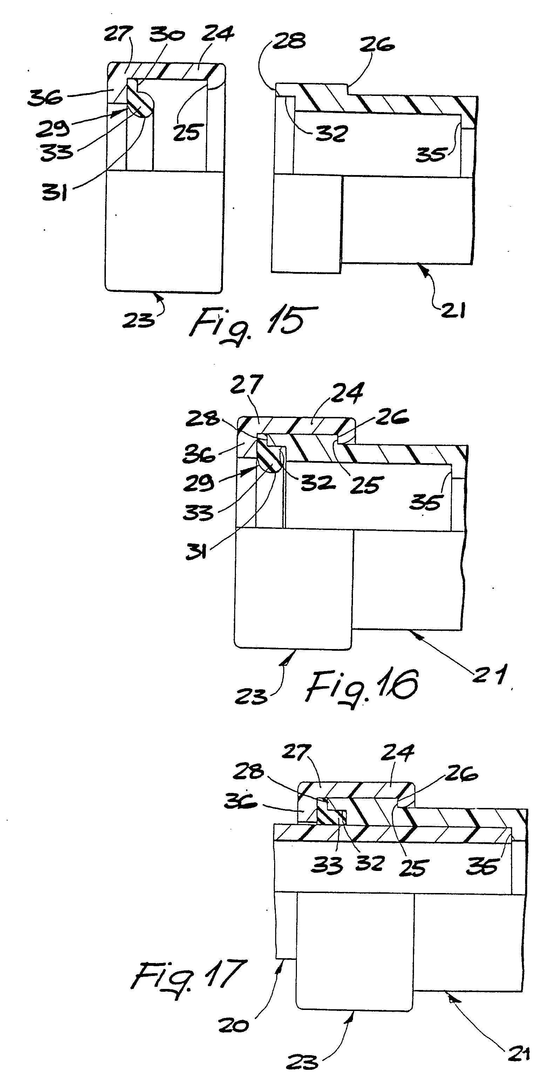

In Figures 5 and 6 the snap-action means consists of a rounded annular rib 26 on the outside of the socket 21 engaging in a corresponding groove 25 inside the skirt portion 24 of the cap 23, while in Figures 11 and 12 it consists of a bevelled annular rib 25 inside the skirt portion of the cap engaging in a corresponding groove 26 round the outside of the socket. In Figures 9 and 10 an inwardly-projecting flange 25 on the skirt portion 24 of the cap 23 and an annular shoulder 26 on the outside of the socket 21 have inclined engaging faces, whereby the flange 25 hooks over the shoulder 26 for great security of the cap on the socket, whereas in Figures 13 and 14 a slight rib 26 on the socket engages in a slight groove 25 in the skirt portion of the cap. The snap-action means 25, 26 in Figures 15 to 17 is similar to that of Figures 1 to 3, the end of the skirt portion 24 of the cap 23 remote from the sealing ring 29 being internally bevelled or rounded to facilitate fitting of the cap on to the socket, while in Figures 5 to 12 the inclining (or bevelling) of the rim 28 of the socket also serves to facilitate fitting of the cap on to the socket.

In Figures 13 and 14 the sealing ring 29 has four lips 33 for sealing engagement with an inserted pipe (not shown), and the sealing ring has annular recesses 40 (between ana lips) to accommodate displaced lip material from three lips, the other being accommodated in the internal enlargement 32 of the socket.

Finally in Figures 15 and 16 the sealing lip (or head) 33 of the sealing ring 29 has a substantially circular. cross-section and makes contact with the cylindrical surface of the socket enlargement 32 upon fitting of the cap 23 on the socket, as shown in Figure 16, and before insertion of a pipe 20 - (Figure 17), which results in the sealing lip (or head 33) being compressed within the enlargement 32 as well as being deflected and/or distended.

## Claims

1. A plastics coupling for use with plastics pipe, the coupling being characterised by a socket (21) having an internal diameter adapted to receive an end of a plastics pipe (20) with an easy fit suitable for securing and sealing of the inserted pipe by solvent cement welding or adhesive or sealant (22), and an annular cap (23) having a skirt portion (24) slidable over the outside of the socket, snap-action means (25, 26) between the skirt portion and the socket which when engaged prevents accidental removal of the cap from the socket, a cuff portion (27) of the cap (23) projecting beyond the rim (28) of the socket (21) when the snap-action means has been engaged, and a sealing ring (29) sealingly secured within the cuff portion (27) such that when the snap-action means (25, 26) has been engaged the inner side (30) of the sealing ring will be in sealing engagement with the rim (28) of the socket and the inner periphery (31) of the sealing ring can seal round an inserted pipe.

2. A pipe coupling as in Claim 1, characterised in that the socket (21) has an internal enlargement (32) adjoining the rim (28) , and the sealing ring (29) has a sealing lip (33) adapted to be accommodated in the enlargement at least when the sealing lip is deflected and distended by an inserted pipe end.

3. A pipe coupling as in Claim 2, characterised in that the sealing lip (3) extends into the socket enlargement (32) upon snapping of the cap (23) on the socket (21).

4. A pipe coupling as in Claim 3, characterised in that the sealing lip (33) makes contact with the cylindrical surface of the socket enlargement (32) either before or as a result of insertion of a pipe.

5. A pipe coupling as in any one of Claims 1 to 4, characterised in that the cap (23) is a simple sleeve with the sealing ring (29) co-moulded in the cuff portion.

6. A pipe coupling as in any one of Claims 1 to 4, characterised in that the cuff portion (27) of the cap (28) has an inwardly-projecting annular flange (36) with an internal diameter not less than the internal diameter of the socket (21), the flange (36) affording pre-location of the sealing ring (29) during co-moulding with the cap or when securing the sealing ring in the cap by adhesive or other bonding.

7. A pipe coupling as in Claim 6, characterised in that the flange (36) in the cap (23) also co-operates with the rim (28) of the socket (21) to grip an annular body portion (37) of the sealing ring (29).

8. A pipe coupling as in Claim 7, characterised in that the flange (36) and/or the rim (28) is inclined to the axis of the coupling so as to form with the inside of the cuff portion (27) a dovetail or half-dovetail affording additional security to the body portion (37) of the sealing ring.

9. A pipe coupling as in any one of Claims 1 to 8, characterised in that the sealing ring (29) has more than one lip (33) for sealing engagement with an inserted pipe, and the sealing ring (29) has an annular recess or recesses (40) to accommodate displaced lip material.

10. A pipe coupling as in any one of Claims 1 to 9, characterised in that the snap-action means is an annular inwardly-projecting flange (25) on the skirt portion (24) on the cap (23) engaging behind an annular shoulder (26) on the outside of the socket (21).

11. A pipe coupling as in any one of Claims 1 to 9, characterised in that, the snap-action means is an annular rib (26) on the outside of the socket (21) engaging in a corresponding groove (25) inside the skirt portion (24) of the cap (23), or vice versa.

12. A pipe coupling as in any one of Claims 1 to 11, characterised in that the rim (28) of the socket (21) is externally bevelled or rounded, and/or the end of the skirt portion (24) of the cap (23) remote from the sealing ring (29) is internally bevelled or rounded, to facilitate fitting of the cap on to the socket.

Fig. 1

Fig. 2

Fig. 3

Fig. 4

*Fig.5*

*Fig.6*

Fig.7

Fig.8

Fig. 9

Fig. 10

EP 0 311 296 A1

Fig. 11

Fig. 12

*Fig. 13*

*Fig. 14*

Fig. 15

Fig. 16

Fig. 17

European Patent
Office

**EUROPEAN SEARCH REPORT**

| | **DOCUMENTS CONSIDERED TO BE RELEVANT** | | EP 88309001.1 | |
|---|---|---|---|---|
| Category | Citation of document with indication, where appropriate, of relevant passages | Relevant to claim | CLASSIFICATION OF THE APPLICATION (Int. Cl.4) | |
| X | EP - A2 - 0 188 012 (WAVIN B.V.)  * Totality * | 1,2,4- 7,9,11 | F 16 L 47/06  F 16 L 13/11 | |
| X | EP - A2 - 0 026 536 (WAVIN B.V.)  * Totality * | 1,2,4- 7,9,11 | | |
| X | EP - A1 - 0 013 457 (WAVIN B.V.)  * Totality * | 1,2,4- 7,9 | | |
| X | US - A - 4 566 704 (VAN DONGEREN)  * Totality * | 1,2,4- 7,10 | | |
| X | US - A - 4 108 446 (LLOYD)  * Totality * | 1,2,4- 7,10 | TECHNICAL FIELDS SEARCHED (Int. Cl.4) | |
| | | | F 16 L 13/00  F 16 L 47/00 | |

The present search report has been drawn up for all claims

| Place of search | Date of completion of the search | Examiner |
|---|---|---|
| VIENNA | 29-12-1988 | SCHUGANICH |

EPO Form 1503 03 82